# EUROPEAN PATENT APPLICATION

(11) **EP 3 202 940 A1**
(43) Date of publication of application: **09.08.2017**
(21) Application number: 15847508.7
(22) Date of filing: 30.09.2015
(51) Int. Cl.: C22C 38/00, C21D 9/46, C22C 38/54, H01M 8/0202, H01M 8/10

(54) **FERRITIC STAINLESS STEEL MATERIAL, SEPARATOR FOR SOLID POLYMER FUEL CELLS WHICH USES SAME, AND SOLID POLYMER FUEL CELL**

(30) Priority: 01.10.2014 JP 2014203318
(71) Applicant: Nippon Steel & Sumitomo Metal Corporation, Tokyo 100-8071 (JP)
(72) Inventor: TARUTANI, Yoshio, Tokyo 100-8071 (JP); YAZAWA, Takeo, Tokyo 100-8071 (JP); HAMADA, Ryuji, Tokyo 100-8071 (JP); SEKI, Akira, Tokyo 100-8071 (JP); IMAMURA, Junko, Tokyo 100-8071 (JP)
(74) Representative: J A Kemp
(86) International application number: PCT/JP2015/077751
(87) International publication number: WO 2016/052623

(57) **Abstract**

There is provided a ferritic stainless steel material that has a chemical composition containing, by mass%, C: 0.02 to 0.15%, Si: 0.01 to 1.5%, Mn: 0.01 to 1.5%, P: 0.035% or less, S: 0.01% or less, Cr: 22.5 to 35.0%, Mo: 0.01 to 6.0%, Ni: 0.01 to 6.0%, Cu: 0.01 to 1.0%, N: 0.035% or less, V: 0.01 to 0.35%, B: 0.5 to 1.0%, Al: 0.001 to 6.0%, rare earth metal: 0 to 0.10%, Sn: 0 to 2.50%, and the balance: Fe and impurities, in which a value calculated as {Cr content (mass%) + 3 × Mo content (mass%) - 2.5 × B content (mass%) - 17 × C content (mass%)} ranges from 20 to 45%, the ferritic stainless steel material further having a parent phase comprising only a ferritic phase, in which at least composite metallic precipitates including M₂₃C₆ carbide-based metallic precipitates precipitated on surfaces and at peripheries of M₂B boride-based metallic precipitates serving as precipitation nuclei are dispersed and exposed on a surface of the parent phase.

## Description

### TECHNICAL FIELD

The present invention relates to a ferritic stainless steel material, and, a separator for polymer electrolyte fuel cells and a polymer electrolyte fuel cell that use the ferritic stainless steel material. The term "separator" herein may also be referred to as a "bipolar plate".

### BACKGROUND ART

Fuel cells are electric cells that utilize hydrogen and oxygen to generate a direct current, and are broadly categorized into a solid electrolyte type, a molten carbonate type, a phosphoric acid type, and a polymer electrolyte type. Each type is derived from the constituent material of an electrolyte portion that constitutes the basic portion of the fuel cell.

Nowadays, fuel cells that have reached the commercial stage include phosphoric acid type fuel cells, which operate in the vicinity of 200°C, and molten carbonate type fuel cells, which operate in the vicinity of 650°C. As technological development has moved forward in recent years, attention is given to polymer electrolyte fuel cells, which operate in the vicinity of room temperature, and solid electrolyte fuel cells, which operate at 700°C or more, as small-sized power sources for automobile use or home use.

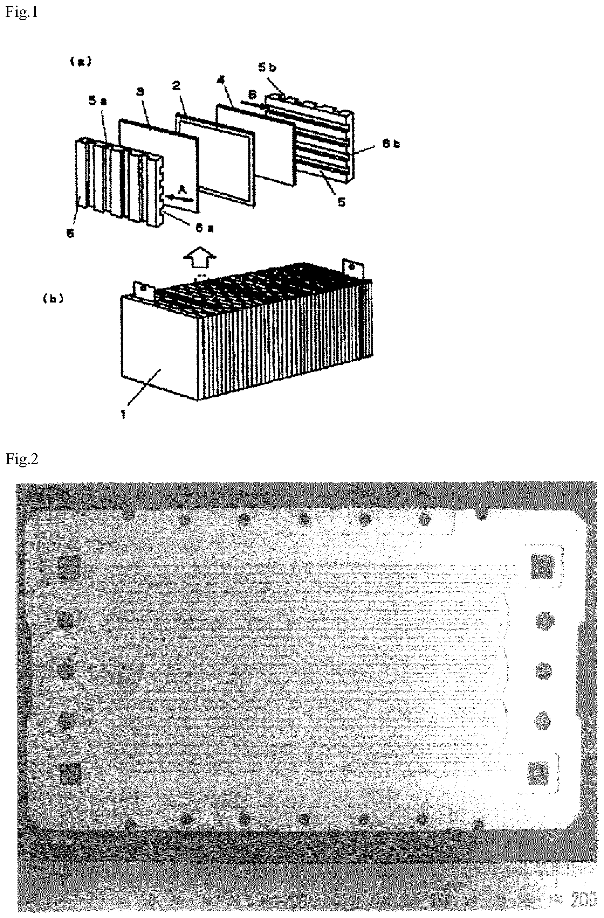

Figure 1 is a schematic diagram illustrating the structure of a polymer electrolyte fuel cell, where Figure 1(a) is an exploded view of a fuel cell (unit cell), and Figure 1(b) is a perspective view of the entire fuel cell.

As illustrated in Figure 1(a) and Figure 1(b), a fuel cell 1 is an assembly of unit cells. As illustrated in Figure 1(a), a unit cell has a structure in which a fuel electrode layer (anode) 3 is laminated on one surface of a solid polymer electrolyte membrane 2, an oxide electrode layer (cathode) 4 is coated on the other surface, and separators 5a and 5b are located on both of the surfaces.

A typical example of the solid polymer electrolyte membrane 2 is a fluorinated ion exchange resin film that has hydrogen ion (proton) exchange groups.

The fuel electrode layer 3 and the oxide electrode layer 4 each include a diffusion layer that is made of carbon paper or carbon cloth constituted by carbon fiber and has a surface on which a catalyst layer is provided that is made of a particulate platinum catalyst, graphite powder, and a fluorocarbon resin with hydrogen ion (proton) exchange groups, and the catalyst layer comes in contact with fuel gas or oxidizing gas that permeates through the diffusion layer.

A fuel gas (hydrogen or a hydrogen containing gas) A is fed through channels 6a formed in the separator 5a to supply hydrogen to the fuel electrode layer 3. An oxidizing gas B such as air is fed through channels 6b formed in the separator 5b to supply oxygen. The supply of these gases causes an electrochemical reaction, whereby direct current power is generated.

A solid polymer fuel cell separator is required to have functions including: (1) a function as a "channel" for supplying a fuel gas with in-plane uniformity on a fuel electrode side; (2) a function as a "channel" for efficiently discharging water produced on a cathode side from the fuel cell out of the system, together with carrier gases such as air and oxygen after the reaction; (3) a function as an electrical "connector" between unit cells that maintains low electrical resistance and favorable electric conductivity as an electrode over a long time period; and (4) a function as an "isolating wall" between adjacent unit cells for isolating an anode chamber of one unit cell from a cathode chamber of an adjacent unit cell.

Although applications of a carbon plate material as a separator material have been earnestly studied at the laboratory level up to now, there is a problem with a carbon plate material in that it easily cracks, and there is also a problem in that machining costs for flattening the surface and machining costs for forming a gas channel are extremely high. Each of these problems is significant and makes the commercialization of fuel cell difficult.

Among carbonaceous materials, a thermally expandable graphite processed product receives the most attention as a starting material for polymer electrolyte fuel cell separators because of its remarkable inexpensiveness. However, several problems remain to be solved in this regard including how to deal with increasingly strict demands for dimensional accuracy, age deterioration of an organic resin binder that arises during application to fuel cells, carbon corrosion that progresses under the influence of cell operation conditions, and unexpected cracking problems that arise when assembling a fuel cell and during use.

As a move in contrast to such studies about applications of a graphite-based starting material, attempts are being made to apply stainless steel to separators with the objective of reducing costs.

Patent Document 1 discloses a separator for fuel cells composed of a metal member, in which a surface making contact with an electrode of a unit cell is directly plated with gold. Examples of the metal member include stainless steel, aluminum, and Ni-Fe alloy, with SUS 304 being used as the stainless steel. According to this invention since the separator is plated with gold, it is considered that contact resistance between the separator and an electrode is reduced, which makes electric conduction from the separator to the electrode favorable, resulting in a high output power of a fuel cell.

Patent Document 2 discloses a polymer electrolyte fuel cell that includes separators made of a metal material in which a passivation film formed on the surface thereof is easily produced by air. Patent Document 2 shows a stainless steel and a titanium alloy as examples of the metal material. According to this invention, it is considered that the passivation film definitely exists on the surface of the metal material used for the separators so as to prevent chemical erosion of the surface, which reduces the degree of ionization of water generated in unit cells of the fuel cell, suppressing the reduction of the electrochemical reactivity in the unit cells. It is also considered that an electrical contact resistance value is lowered by removing a passivation film on a portion making contact with an electrode membrane or the like of a separator and forming a layer of a noble metal.

However, even when a metal material such as a stainless steel coated with a passivation film on the surface thereof as disclosed in Patent Documents 1 and 2 is used as it is for a separator, the metal material exhibit insufficient corrosion resistance and elution of metal occurs, and performance of the supported catalyst deteriorates due to eluted metal ions. Further, since the contact resistance of the separator increases due to corrosion products such Cr-OH or Fe-OH generated after elution, separators made of a metal material are actually plated with a noble metal such as gold, despite the cost thereof.

Under such circumstances, there is also proposed a stainless steel as a separator that is excellent in corrosion resistance and applicable as it is in primary surface without performing expensive surface treatment.

Patent Document 3 discloses a ferritic stainless steel for a polymer electrolyte fuel cell separator that does not contain B in the steel and does not precipitate any of M₂₃C₆, M₄C, M₂C, and MC carbide-based metal inclusions and M₂B boride-based metal inclusions as conductive metallic precipitates in the steel, and has an amount of C in the steel of 0.012% or less (in the present specification, the symbol "%" in relation to chemical composition means "mass%" unless specifically stated otherwise). Furthermore, Patent Documents 4 and 5 disclose polymer electrolyte fuel cells to which a ferritic stainless steel including no conductive metallic precipitates precipitating is applied as a separator.

Patent Document 6 discloses a ferritic stainless steel for a separator of a polymer electrolyte fuel cell that does not contain B in the steel and contains 0.01 to 0.15% of C in the steel and precipitates only Cr-based carbides, and discloses a polymer electrolyte fuel cell to which the ferritic stainless steel is applied.

Patent Document 7 discloses an austenitic stainless steel for a separator of a polymer electrolyte fuel cell that does not contain B in the steel, contains 0.015 to 0.2% of C and 7 to 50% of Ni in the steel, and precipitates Cr-based carbides.

Patent Document 8 discloses a stainless steel for a separator of a polymer electrolyte fuel cell in which one or more kinds of M₂₃C₆, M₄C, M₂C, and MC carbide-based metal inclusions and M₂B boride-based metal inclusions having electrical conductivity are dispersed and exposed on a surface of the stainless steel, and discloses a ferritic stainless steel that contains C: 0.15% or less, Si: 0.01 to 1.5%, Mn: 0.01 to 1.5%, P: 0.04% or less, S: 0.01% or less, Cr: 15 to 36%, Al: 0.001 to 6%, and N: 0.035% or less, in which the contents of Cr, Mo, and B satisfy the expression 17% ≤ Cr + 3 × Mo - 2.5 × B, with the balance being Fe and inevitable impurities.

Patent Document 9 discloses a method for producing a stainless steel material for a separator of a polymer electrolyte fuel cell in which a surface of the stainless steel material is corroded by an acidic aqueous solution to expose, on the surface, one or more kinds of M₂₃C₆, M₄C, M₂C, and MC carbide-based metal inclusions and M₂B boride-based metal inclusions having electrical conductivity, and discloses a ferritic stainless steel material that contains C: 0.15% or less, Si: 0.01 to 1.5%, Mn: 0.01 to 1.5%, P: 0.04% or less, S: 0.01% or less, Cr: 15 to 36%, Al: 0.001 to 6%, B: 0 to 3.5%, N: 0.035% or less, Ni: 0 to 5%, Mo: 0 to 7%, Cu: 0 to 1%, Ti: 0 to 25×(C%+N%), and Nb: 0 to 25 × (C% + N%), in which the contents of Cr, Mo, and B satisfy the expression 17% ≤ Cr + 3 × Mo - 2.5 × B, with the balance being Fe and impurities.

Patent Document 10 discloses a polymer electrolyte fuel cell in which an M₂B boride-based metal compound is exposed on the surface, and assuming that an anode area and a cathode area are both one, the area of the anode making direct contact with a separator and the area of the cathode making direct contact with a separator each have a proportion within a range of 0.3 to 0.7, and discloses a stainless steel in which one or more kinds of M₂₃C₆, M₄C, M₂C, and MC carbide-based metal inclusions and M₂B boride-based inclusions having electrical conductivity are exposed on a surface of the stainless steel. In addition, Patent Document 10 discloses a stainless steel constituting the separator being a ferritic stainless steel material that contains C: 0.15% or less, Si: 0.01 to 1.5%, Mn: 0.01 to 1.5%, P: 0.04% or less, S: 0.01% or less, Cr: 15 to 36%, Al: 0.2% or less, B: 3.5% or less (however, excluding 0%), N: 0.035% or less, Ni: 5% or less, Mo: 7% or less, W: 4% or less, V: 0.2% or less, Cu: 1% or less, Ti: 25 × (C% + N%) or less, and Nb: 25 × (C% + N%) or less, in which the contents of Cr, Mo, and B satisfy the expression 17% ≤ Cr + 3 × Mo - 2.5 × B.

In addition, Patent Documents 11 to 15 disclose austenitic stainless clad steel materials in which M₂B boride-based conductive metallic precipitates are exposed on the surface, as well as methods for producing the austenitic stainless clad steel materials.

Patent Document 16 discloses a stainless steel in which one or more kinds M₂₃C₆, M₄C, M₂C, and MC carbide-based metal inclusions and M₂B boride-based metal inclusions having electrical conductivity are dispersed and exposed on a surface of the stainless steel. The stainless steel is, for example, a ferritic stainless steel consisting of, by mass%, C: 0.15% or less, Si: 0.01 to 1.5%, Mn: 0.01 to 1.5%, P: 0.04% or less, S: 0.01% or less, Cr: 15 to 36%, Al: 0.001 to 6%, B: 0 to 3.5%, N: 0.035% or less, Ni: 0 to 5%, Mo: 0 to 7%, Cu: 0 to 1%, Ti: 0 to 25 × (C% + N%), and Nb: 0 to 25 × (C% + N%), in which the contents of Cr, Mo, and B satisfy the expression 17% ≤ Cr + 3 × Mo - 2.5 × B, with the balance being Fe and inevitable impurities.

Patent Document 17 discloses a ferritic stainless steel plate formed with an oxide film having good electrical conductivity at a high temperature. The ferritic stainless steel plate contains, by mass%, C: 0.02% or less, Si: 0.15% or less, Mn: 0.3 to 1%, P: 0.04% or less, S: 0.003% or less, Cr: 20 to 25%, Mo: 0.5 to 2%, Al: 0.1% or less, N: 0.02% or less, and Nb: 0.001 to 0.5%, with the balance being Fe and inevitable impurities, and satisfies the expression 2.5 < Mn / (Si + Al) < 8.0. The ferritic stainless steel plate further contains, by mass%, one, or two or more kinds of Ti: 0.5% or less, V: 0.5% or less, Ni: 2% or less, Cu: 1% or less, Sn: 1% or less, B: 0.005% or less, Mg: 0.005% or less, Ca: 0.005% or less, W: 1% or less, Co: 1% or less, and Sb: 0.5% or less.

Patent Document 18 discloses a ferritic stainless steel in which a passivation film is modified by addition of Sn to improve corrosion resistance. The ferritic stainless steel contains, by mass%, C: 0.01% or less, Si: 0.01 to 0.20%, Mn: 0.01 to 0.30%, P: 0.04% or less, S: 0.01% or less, Cr: 13 to 22%, N: 0.001 to 0.020%, Ti: 0.05 to 0.35%, Al: 0.005 to 0.050%, and Sn: 0.001 to 1%, with the balance being Fe and inevitable impurities.

### LIST OF PRIOR ART DOCUMENTS

### PATENT DOCUMENTS

Patent Document 1: JP10-228914A
Patent Document 2: JP8-180883A
Patent Document 3: JP2000-239806A
Patent Document 4: JP2000-294255A
Patent Document 5: JP2000-294256A
Patent Document 6: JP2000-303151A
Patent Document 7: JP2000-309854A
Patent Document 8: JP2003-193206A
Patent Document 9: JP2001-214286A
Patent Document 10: JP2002-151111A
Patent Document 11: JP2004-071319A
Patent Document 12: JP2004-156132A
Patent Document 13: JP2004-306128A
Patent Document 14: JP2007-118025A
Patent Document 15: JP2009-215655A
Patent Document 16: JP2001-32056A
Patent Document 17: JP2014-031572A
Patent Document 18: JP2009-174036A

### SUMMARY OF INVENTION

### TECHNICAL PROBLEM

An objective of present invention is to provide a ferritic stainless steel material that is remarkably excellent in corrosion resistance in an environment inside a polymer electrolyte fuel cell and has contact electrical resistance that is equal to that of a gold-plated material, a separator for polymer electrolyte fuel cells that is made of the stainless steel material, and a polymer electrolyte fuel cell to which the separator is applied.

### SOLUTION TO PROBLEM

The present inventors have concentrated for many years on the development of a stainless steel material that causes an extremely little metal elution from the surface of a metallic separator and causes almost no progression of metal ion contamination of an MEA (abbreviation of "membrane electrode assembly") including a diffusion layer, a polymer membrane, and a catalyst layer, and that is hard to cause a reduction in catalyst performance or a reduction in polymer membrane performance, even when used for a long time period as a separator of a polymer electrolyte fuel cell.

Specifically, as a result of studying the application of fuel cells using the conventional SUS 304 and SUS 316L, gold-plated materials thereof, a stainless steel material with M₂B and/or M₂₃C₆ conductive metallic precipitates dispersed, a stainless steel material coated or painted with conductive particulate powder, a surface-modified stainless steel material, and the present invention is completed with the following findings (a) to (c) listed below obtained.
(a) M₂B finely dispersed in steel and exposed on the surface of the steel noticeably improves the electrical conductivity (electrical contact resistance) of the surface by functioning as a "passage for electricity" on a stainless steel surface that is covered with a passivation film. However, although the electrical contact resistance performance is as low as that of a gold-plated starting material, there is room for further improvement in stability.
(b) By causing M₂₃C₆ to precipitate in complex form on the surface or at the periphery of precipitation nuclei that are M₂B finely dispersed in steel and exposed on the surface of the steel, the electrical conductivity (electrical contact resistance) of the surface is noticeably improved compared to a state where M₂B alone or M₂B and M₂₃C₆ precipitate and disperse independently. This makes the electrical contact resistance performance as low as that of a gold-plated starting material, and the performance is stable.
(c) A favorable corrosion resistance is ensured by positively adding Mo. Mo has a relatively minor influence on the performance of a catalyst supported on anode and cathode portions if being eluded. That is considered due to the eluted Mo existing in the form of molybdate ions, which are anions and have a small effect that inhibits the proton conductivity of a fluorinated ion exchange resin film having hydrogen ion (proton) exchange groups. Similar behavior is also expected to V.

The present invention is as described below.
(1) A ferritic stainless steel material having a chemical composition consisting of, by mass%,
   C: 0.02 to 0.15%,
   Si: 0.01 to 1.5%,
   Mn: 0.01 to 1.5%,
   P: 0.035% or less,
   S: 0.01% or less,
   Cr: 22.5 to 35.0%,
   Mo: 0.01 to 6.0%,
   Ni: 0.01 to 6.0%,
   Cu: 0.01 to 1.0%,
   N: 0.035% or less,
   V: 0.01 to 0.35%,
   B: 0.5 to 1.0%,
   Al: 0.001 to 6.0%,
   rare earth metal: 0 to 0.10%,
   Sn: 0 to 2.50%, and,
   the balance: Fe and impurities, wherein:
      a value calculated as {Cr content (mass%) + 3 × Mo content (mass%) - 2.5 × B content (mass%) - 17 × C content (mass%)} is from 20 to 45%,
      the ferritic stainless steel material further having a parent phase comprising only a ferritic phase, wherein:
      at least composite metallic precipitates including M₂₃C₆ carbide-based metallic precipitates precipitated on surfaces and at peripheries of M₂B boride-based metallic precipitates serving as precipitation nuclei are dispersed and exposed on a surface of the parent phase.
(2) The ferritic stainless steel material according to the above (1), wherein the chemical composition contains, by mass%,
   rare earth metal: 0.001 to 0.10%.
(3) The ferritic stainless steel material according to the above (1) or (2), wherein
   the chemical composition contains, by mass%,
   Sn: 0.02 to 2.50%.
(4) The ferritic stainless steel material according to any one of the above (1) to (3), wherein one or two kinds of M₂B boride-based metallic precipitates and M₂₃C₆ carbide-based metallic precipitates are further independently dispersed and exposed on the surface.
(5) The ferritic stainless steel material according to any one of the above (1) to (4), wherein the parent phase becomes a dual-phase micro-structure of a ferritic phase and an austenite phase in a temperature range of 1100°C or more and 1170°C or less.
(6) A separator for a polymer electrolyte fuel cell constituted by a ferritic stainless steel material for a polymer electrolyte fuel cell separator according to any one of the above (1) to (5).
(7) A polymer electrolyte fuel cell constituted by a ferritic stainless steel material for a polymer electrolyte fuel cell separator according to any one of the above (1) to (5).

In the present invention, the character "M" in M₂B and M₂₃C₆ denotes a metallic element, but "M" does not denote a specific metallic element, but rather denotes a metallic element with strong chemical affinity for Cr or B. Generally, in relation with coexisting elements in steel, M is mainly composed of Cr and Fe, and often contains traces of Ni and Mo. Examples of M₂B boride-based metallic precipitates include Cr₂B, (Cr, Fe)₂B, (Cr, Fe, Ni)₂B, (Cr, Fe, Mo)₂B, (Cr, Fe, Ni, Mo)₂B, and Cr_{1.2}Fe_{0.76}Ni_{0.04}B. In the case of carbide, B also has an action as "M". Examples of M₂₃C₆ include Cr₂₃C₆, (Cr, Fe)₂₃C₆ and the like.

In both of the aforementioned M₂B boride-based metallic precipitates and M₂₃C₆ carbide-based metallic precipitates, metallic precipitates having part of C replaced by B, such as M₂₃(C, B)₆ carbide-based metallic precipitates and M₂(C, B) boride-based metallic precipitates, are also precipitated in some cases. The above expressions are assumed to include these metallic precipitates as well. Basically, metal-based dispersants with favorable electrical conductivity are expected to exhibit similar performance.

In the present invention, the subscript "₂" in the term "M₂B" means that "Between the amount of Cr, Fe, Mo, Ni, and X (where, X denotes a metallic element other than Cr, Fe, Mo, and Ni in steel) that are metallic elements in boride, and the B amount", such a stoichiometric relation is established that (Cr mass% / Cr atomic weight + Fe mass% / Fe atomic weight + Mo mass% / Mo atomic weight + Ni mass% / Ni atomic weight + X mass% / X atomic weight) / (B mass% / B atomic weight) is approximately two. This style of expression is not specific, and is very general.

### ADVANTAGEOUS EFFECTS OF INVENTION

According to the present invention, a ferritic stainless steel material having an excellent metal ion elution resistance property is obtained without performing a high cost surface treatment such as expensive gold plating to reduce the contact resistance of the surface. That is, a ferritic stainless steel material is obtained which is remarkably excellent in corrosion resistance in an environment in a polymer electrolyte fuel cell and has contact electrical resistance that is equal to that of a gold-plated material. The stainless steel material is suitable for use as a separator in a polymer electrolyte fuel cell. For the fully-fledged dissemination of polymer electrolyte fuel cells, it is extremely important to reduce the cost of the fuel cell body, particularly the cost of the separator. It is anticipated that the fully-fledged dissemination of polymer electrolyte fuel cells with metallic separators applied thereto will be accelerated by the present invention.

### BRIEF DESCRIPTION OF DRAWINGS

[Figure 1] Figure 1 is a multiple-view schematic diagram illustrating the structure of a polymer electrolyte fuel cell, where Figure 1(a) is an exploded view of a a fuel cell (unit cell), and Figure 1(b) is a perspective view of an entire fuel cell.
[Figure 2] Figure 2 is a photograph showing an example of the shape of a separator (may be also referred to as a "bipolar plate") that was produced in Examples 3 and 6.

### DESCRIPTION OF EMBODIMENTS

Embodiments for carrying out the present invention will be described in detail. Hereinafter, the symbols "%" all refer to "mass %".

### 1. M₂B Boride-based Metallic Precipitates

M₂B contains 60% or more of Cr, and exhibits corrosion resistance that is excellent as compared to that of the parent phase. Because of the concentration of Cr higher than that of the parent phase, a passivation film generated on the surface is also thinner, which makes electrical conductivity (electrical contact resistance performance) excellent.

By finely dispersing and exposing M₂B boride-based metallic precipitates having electrical conductivity on the surface of the stainless steel, the electrical contact resistance in a fuel cell can be noticeably reduced over a long period in a stable manner.

The term "exposure" here means that M₂B boride-based metallic precipitates protrude on the external surface without being covered by the passivation film that is generated on the surface of the parent phase of the stainless steel. The exposure of the M₂B boride-based metallic precipitates causes the M₂B boride-based metallic precipitates to function as passages (bypasses) for electricity, so as to have the effect of noticeably reducing the electrical contact resistance of the surface.

Although there is a concern that M₂B boride-based metallic precipitates exposed on the surface will fall off, since the M₂B boride-based metallic precipitates are metallic precipitates, the M₂B boride-based metallic precipitates are metallurgically bonded to the parent phase and do not fall off the surface.

The M₂B boride-based metallic precipitates are precipitated by a eutectic reaction that proceeds at the last stage of solidification, and thus have a composition that is approximately uniform and have a property of being thermally stable in the extreme as well. The M₂B boride-based metallic precipitates do not suffer redissolving, reprecipitation or component changes due to thermal history in the process for producing the steel material. Furthermore, the M₂B boride-based metallic precipitates are extremely hard precipitates. In the processes of hot forging, hot rolling and cold rolling, the M₂B boride-based metallic precipitates are mechanically crushed and finely dispersed uniformly.

### 2. M₂₃C₆ Carbide-based Metallic Precipitates

Although depending on the content of C in the steel, part or all of the M₂₃C₆ carbide-based metallic precipitates are dissolved at the heating temperature for the steel material, and further reprecipitated in the cooling process. By performing a thermo-mechanical treatment under appropriate heating and cooling conditions set, composite metallic precipitates can be formed in which M₂₃C₆ carbide-based metallic precipitates are precipitated on the surface and at the periphery of M₂B boride-based metallic precipitates serving as precipitation nuclei.

In the present invention, by making use of the above behavior, M₂₃C₆ is precipitated on the surface or at the periphery of M₂B, with M₂B serving as a precipitation nucleus. More specifically, in order to precipitate M₂₃C₆ on the surface or at the periphery of the M₂B, with M₂B serving as a precipitation nucleus, to form a composite metallic precipitate, all or part of M₂₃C₆ precipitated in a subsequent cooling process after being cast in a continuous casting slab is once dissolved in the parent phase and are thereafter reprecipitated on the surface or at the periphery of M₂B.

That is, once M₂₃C₆ is heated to and held in a temperature region in which the M₂₃C₆ is dissolved, precipitation is controlled while being heated to and held in a temperature region in which M₂₃C₆ is precipitated so that the M₂₃C₆ is reprecipitated on the surface or at the periphery of M₂B. A temperature at which M₂₃C₆ is dissolved and reprecipitated depends on the amount of Cr and amount of C in the steel, and the dissolution behavior and reprecipitation behavior of M₂₃C₆ change depending on whether the parent phase in a thermally parallel state is a ferrite single-phase micro-structure, an austenite single-phase micro-structure, or a dual-phase micro-structure of a ferritic phase and an austenite phase.

As is well-known, the solubility of C in an austenite phase is high as compared to the solubility in a ferritic phase. Although depending on the amount of Cr, when held in a high temperature region to perform annealing, the most preferable is that the ferritic stainless steel according to the present invention is subjected to component adjustment so as to have a dual-phase micro-structure of a ferritic phase and an austenite phase, followed by to have an austenite single-phase micro-structure, and then to have a ferritic single-phase micro-structure in this order.

If the ferritic stainless steel has a ferritic single-phase micro-structure in the heated and held state, the solubility of C to the parent phase is small, and thus a large portion of the M₂₃C₆ remains as M₂₃C₆, and the amount of M₂₃C₆ carbide-based metallic precipitates that are reprecipitated with a temperature decrease is small.

On the other hand, if the ferritic stainless steel has an austenite single-phase micro-structure, the solubility of C to the parent phase is large, the amount of C derived from M₂₃C₆ that thermally decomposes is large, and the amount of M₂₃C₆ carbide-based metallic precipitates that are reprecipitated with a temperature decrease is also large. However, when a large amount of an austenite stabilizing element is included in the chemical composition, it is difficult to make the ferritic stainless steel a ferrite single-phase micro-structure by means of a final annealing process, and it becomes necessary to perform further ferritization by performing an annealing process for a long time period exceeding around 20 hours in a temperature region of 600 to 700°C, which results in a reduction in productivity.

In the present invention, a ferrite single-phase micro-structure is the most preferable form of the final product. The reason is that a dual-phase micro-structure of a ferritic phase and an austenite phase makes formability of a sheet anisotropic and it is difficult to use the stainless steel as a starting material for a fuel cell separator for which isotropic workability is required. However, an austenite phase of a degree to which the formability does not become a problem is allowable. The amount is approximately 5 to 6 volume% or less, although depending on the processing method.

In other words, if a heated and held steel is in a dual-phase state of a ferritic phase and an austenite phase, a large amount of C is dissolved in the austenite phase because of the large solubility of C in the austenite phase, which however increases the amount of M₂₃C₆ reprecipitated in a new ferritic phase (prior-austenite phase) that arises as a result of phase transformation from the austenite phase to the ferritic phase that proceeds with a decrease in temperature, and the diffusion velocity of C that becomes slow with a decrease in temperature promotes reprecipitation of M₂₃C₆ with M₂B dispersed in the prior-austenite phase serving as a nucleus.

In the ferritic stainless steel according to the present invention, this behavior is utilized to cause M₂₃C₆ to precipitate on the surface or at the periphery of M₂B with M₂B serving as a precipitation nucleus.

Specifically, it is most preferable that, when heated and held at a temperature in a range of 1100°C or more and 1170°C or less, M₂₃C₆ is dissolved (disappears) due to thermal decomposition and the parent phase comes to have a ferrite-austenite dual-phase micro-structure in which only M₂B is independently dispersed, and during a process of cooling from 950°C or less to room temperature or when heated and held in that temperature region the parent phase changes to a ferrite single-phase micro-structure, and at room temperature, the parent phase comes to have a ferrite single-phase micro-structure in which at least two or more kinds of composite metallic precipitates, and M₂B or M₂₃C₆ are finely dispersed in the steel, the composite metallic precipitates including M₂₃C₆ carbide-based metallic precipitates precipitated on the surfaces and at the peripheries of M₂B boride-based metallic precipitates serving as precipitation nuclei. With respect to the form of the precipitates, it becomes more desirable as a larger amount of composite metallic precipitates is obtained including M₂₃C₆ carbide-based metallic precipitates precipitated on the surfaces or at the peripheries of M₂B boride-based metallic precipitates serving as precipitation nuclei, and it becomes more preferable as the amount of M₂₃C₆ metallic precipitates that independently disperse becomes smaller. In addition, hot rolling and cold rolling are performed after heating to a temperature within a range of 1000°C or more and 1230°C or less, preferably a range of 1100°C or more and 1170°C or less and dissolving M₂₃C₆ in the parent phase, particularly, dissolving a large amount of C in the austenite phase, where it is important to make the temperature in a range of 950°C or less and 600°C or more at which M₂₃C₆ is newly precipitated without being redissolved, for a finishing annealing process that is performed after an intermediate annealing process and cold rolling which are performed in the cold rolling process.

M₂₃C₆ carbide-based metallic precipitates is excellent in electrical conductivity as compared to that of M₂B boride-based metallic precipitates. However, it is difficult to cause M₂₃C₆ carbide-based metallic precipitates to be precipitated and dispersed in a large size and a large amount relative to M₂B boride-based metallic precipitates which are dispersed in a large size and in a large amount. Therefore, by causing the M₂₃C₆ carbide-based metallic precipitates to precipitate on the surface and at the periphery with the M₂B boride-based metallic precipitates dispersed in a large size and a large amount serving as precipitation nuclei, it is possible to create a state that can be regarded as a state where M₂₃C₆ carbide-based metallic precipitates larger than the M₂B boride-based metallic precipitates are dispersed. In other words, as steel material for a polymer electrolyte fuel cell separator, a more desirable surface state is obtained that is excellent in electrical conductivity in which "passages (bypasses) for electricity" having a larger size and a lower contact resistance are dispersed and present than a state in which M₂B boride-based conductive metallic precipitates are dispersed independently.

### 3. Chemical Composition

### (3-1) C: 0.02 to 0.15%

In the present invention, C is positively added as an alloying element that precipitates M₂₃C₆ carbide-based metallic precipitates. In order to precipitate and disperse the M₂₃C₆ carbide-based metallic precipitates, the content of C is set at 0.02% or more. However, a content of C exceeding 0.15% make the production difficult. Therefore, the content of C is set at 0.15% or less. The content of C is preferably 0.03% or more, and is preferably 0.14% or less.

### (3-2) Si: 0.01 to 1.5%

Similarly to Al, Si is an effective deoxidizing element in mass-produced steel. A content of Si less than 0.01% leads to insufficient deoxidization. On the other hand, a content of Si exceeding 1.5% leads to reduction of formability. Therefore, the content of Si is 0.01% or more and 1.5% or less. The content of Si is preferably 0.05% or more, more preferably 0.1% or more. Further, the content of Si is preferably 1.3% or less, more preferably 1.25% or less.

### (3-3) Mn: 0.01 to 1.5%

Mn has an action of fixing S in the steel as an Mn sulfide, and also has an effect of improving hot workability. In order to effectively exert the aforementioned effects , the content of Mn is set at 0.01% or more. On the other hand, a content of Mn exceeding 1.5% leads to reduction of the adhesiveness of a high-temperature oxide scale generated on the surface at a time of heating during production, which is liable to result in scale peeling to be a cause of surface deterioration. Therefore, the content of Mn is set at 1.5% or less. The content of Mn is preferably 0.05% or more, more preferably 0.08% or more. In addition, the content of Mn is preferably 0.8% or less, more preferably 0.6% or less.

### (3-4) P: 0.035% or less

In the present invention, P in the steel is the most harmful impurity, along with S, and thus the content of P is set at 0.035% or less. The content of P is preferably as low as possible.

### (3-5) S: 0.01% or less

In the present invention, S in the steel is the most harmful impurity, along with P, and thus the content of S is set at 0.01% or less. The content of S is preferably as low as possible. In proportion to coexisting elements in the steel and the content of S in the steel, Most of S is precipitated in the form of Mn-based sulfides, Cr-based sulfides, Fe-based sulfides, or composite non-metallic precipitates with complex sulfides and complex oxides of these sulfides. Furthermore, S may also form a sulfide with a rare earth metal that is added as necessary. However, the non-metallic precipitates of each of these compositions act as a starting point for corrosion in a polymer electrolyte fuel cell separator environment with varying degrees. Therefore, S is harmful in terms of maintaining a passivation film and suppression of metal ion elution. The content of S in usual mass-produced steel is more than 0.005% and at most around 0.008%, but in order to prevent the aforementioned harmful effects of S, the content of S is preferably reduced to 0.004% or less. More preferably, the content of S in the steel is 0.002% or less, and the most preferable content of S in the steel is less than 0.001%. The content of S is preferably as low as possible. Making the content of S less than 0.001% in mass production industrially causes only a slight increase in production costs with present-day refining technology, which is not problematic.

### (3-6) Cr: 22.5 to 35.0%

Cr is an extremely important basic alloying element for ensuring corrosion resistance of the base material. The higher that the Cr content is, the more excellent the corrosion resistance to be exhibited. In a ferritic stainless steel, a content of Cr exceeding 35.0% makes production of the stainless steel on a mass production scale difficult. On the other hand, a content of Cr less than 22.5% results in failure of securing corrosion resistance that is required for steel used as a polymer electrolyte fuel cell separator even with other elements varied, and furthermore, as a result of precipitating in the form of M₂B boride-based metallic precipitates, the corrosion resistance of the base material may deteriorate due to the amount of Cr in the parent phase that contributes to improving the corrosion resistance reduced as compared to the amount of Cr in the molten steel. Cr also reacts with C in the steel to form M₂₃C₆ carbide-based metallic precipitates. The M₂₃C₆ carbide-based metallic precipitates are metallic precipitates that are excellent in electrical conductivity. By exposing both M₂B boride-based metallic precipitates and M₂₃C₆ carbide-based metallic precipitates on the surface, an electrical surface contact resistance value can be reduced. In order to ensure corrosion resistance in the polymer electrolyte fuel cell, at least an amount of Cr that makes a value calculated as {Cr content (mass%) + 3 × Mo content (mass%) - 2.5 × B content (mass%) - 17 × C content (mass%)} from 20 to 45% is required. The content of Cr is preferably 23.0% or more, and is preferably 34.0% or less.

### (3-7) Mo: 0.01 to 6.0%

Mo has an effect of improving the corrosion resistance with a smaller amount as compared to Cr. In order to effectively exert this effect, the content of Mo is set at 0.01% or more. On the other hand, if a content of Mo exceeding 6.0% makes precipitation of intermetallic compounds such as sigma phase during production unavoidable, making production difficult due to the problem of steel embrittlement. For this reason, the upper limit of the Mo content is set at 6.0%. Furthermore, Mo has a property such that the influence thereof on MEA performance is relatively minor, even if elution of Mo in the steel occurs inside a polymer electrolyte fuel cell due to corrosion. The reason is that because Mo exists in the form of molybdate ions that are anions and does not exist in the form of metallic cations, the influence thereof on the cation conductivity of a fluorinated ion exchange resin film having hydrogen ion (proton) exchange groups is small. Mo is an extremely important element for maintaining corrosion resistance, and it is necessary for the amount of Mo in the steel to be an amount that makes a value calculated as {Cr content (mass%) + 3 × Mo content (mass%) - 2.5 × B content (mass%) - 17 × C content (mass%)} from 20 to 45%. The content of Mo is preferably 0.05% or more, and is preferably 5.5% or less.

### (3-8) Ni: 0.01 to 6.0%

Ni has an effect of improving corrosion resistance and toughness. The upper limit of the content of Ni is set at 6.0%. A content of Ni exceeding 6.0% makes it difficult to form a ferritic single-phase micro-structure even if heat treatment is performed industrially. On the other hand, the lower limit for the content of Ni is set at 0.01%. The lower limit of the Ni content is the amount of impurities that enter when production is performed industrially. The content of Ni is preferably 0.03% or more, and is preferably 5.0% or less.

### (3-9) Cu: 0.01 to 1.0%

The content of Cu is 0.01% or more and 1.0% or less. A content of Cu exceeding 1.0% leads to reduction of the hot workability, making mass production difficult. On the other hand, a content of Cu less than 0.01% leads to reduction of corrosion resistance in a polymer electrolyte fuel cell. In the stainless steel according to the present invention, Cu is present in a dissolved state. If Cu is caused to precipitate in the form of a Cu-based precipitate, it becomes a starting point for Cu elution in the cell and noticeably reduces the performance of the fuel cell. The content of Cu is preferably 0.02% or more, and is preferably 0.8% or less.

### (3-10) N: 0.035% or less

N is an impurity in a ferritic stainless steel. Since N degrades toughness at normal temperature, the upper limit of the content of N is set at 0.035%. The content of N is preferably as low as possible. From an industrial viewpoint, the most preferable content of N is 0.007% or less. However, since a excessively reduction of the content of N leads to an increase in melting costs, the content of N is preferably 0.001% or more, more preferably 0.002% or more.

### (3-11) V: 0.01 to 0.35%

Although V is not an added element that is intentionally added, V is inevitably contained in a Cr source that is added as a melting raw material used at a time of mass production. The content of V is set at 0.01% or more and 0.35% or less. Although very slightly, V has an effect of improving toughness at normal temperature. The content of V is preferably 0.03% or more, and is preferably 0.30% or less.

### (3-12) B: 0.5 to 1.0%

In the present invention, similarly to C, B is an important added element. When molten steel is subjected to ingot-making, precipitation of B is completed instantaneously by a eutectic reaction in which all the B in the steel turns from a solid-liquid coexisting state into a state there is only a solid phase in the form of M₂B boride-based metallic precipitates. B is an extremely stably metallic precipitate in terms of thermal properties. M₂B boride-based metallic precipitates exposed on the surface have an action that noticeably lowers electrical surface contact resistance. A content of B is less than 0.5% leads to an insufficient precipitation amount to obtain the desired performance. On the other hand, a content of B exceeding 1.0% makes it difficult to achieve stable mass production. Therefore, the content of B is 0.5% or more and 1.0% or less. The content of B is preferably 0.55% or more, and is preferably 0.8% or less.

### (3-13) Al: 0.001 to 6.0%

Al is added as a deoxidizing element at the molten steel stage. Since B contained in the stainless steel according to the present invention is an element that has a strong bonding strength with oxygen in molten steel, it is necessary to reduce the oxygen concentration by Al deoxidation. Therefore, it is better to include a content of Al within the range of 0.001% or more and 6.0% or less. Although deoxidation products are formed in the steel in the form of nonmetallic oxides, the residue are dissolved. The content of Al is preferably 0.01% or more, and is preferably 5.5% or less.

### (3-14) Rare Earth Metal: 0 to 0.10%

In the present invention, a rare earth metal is an optionally added element, and has an effect of improving hot producibility. Therefore, a rare earth metal may be contained at a content of 0.10% as the upper limit. The content of a rare earth metal is preferably 0.005% or more, and is preferably 0.05% or less.

### (3-15) Sn: 0 to 2.50%

In the present invention, Sn is an optionally added element. By containing Sn in the steel, Sn dissolved in the parent phase noticeably suppresses elution of metal ions from the parent phase by concentrating as metallic tin or tin oxide on the surface inside the polymer electrolyte fuel cell, and also reduces the surface contact resistance of the parent phase so that the electrical contact resistance performance is stable and improved to be as low as that of a gold-plated starting material. In addition, the metallic tin or tin oxide that concentrates on the surface of M₂B makes the maintenance of the electrical conductivity of the surface of M₂B stable. If the Sn content exceeds 2.50%, the producibility will decrease. For this reason, the content of Sn is set at 2.50% or less. On the other hand, a Sn content of less than 0.02% may result in failure of obtaining the aforementioned effects. Consequently, in a case of containing Sn, the content of Sn is preferably 0.02% or more.

### (3-16) Value calculated as {Cr content (mass%) + 3 × Mo content (mass%) - 2.5 × B content (mass%) - 17 × C content (mass%)}

This value is an index that serves as a standard indicating the anticorrosion behavior of ferritic stainless steel in which M₂B boride-based metallic precipitates have been precipitated. This value is set within a range of 20% or more and 45% or less. If this value is less than 20%, corrosion resistance within a polymer electrolyte fuel cell cannot be adequately secured, and the amount of metal ion elution is large. On the other hand, if this value exceeds 45%, mass productivity will deteriorate noticeably.

The balance other than the above elements is made up of Fe and impurities.

Next, advantageous effects of the present invention will be specifically described with reference to examples.

### EXAMPLE 1

Steel materials 1 to 14 having the chemical compositions shown in Table 1 were melted in a 180-kg vacuum furnace, and subsequently cast into flat ingots having a maximum thickness of 80 mm. In Table 1, the symbol "*" indicates that the relevant value is outside the range of the present invention, "REM" represents a misch metal (rare earth metal), and "Index" (%) = Cr% + 3 × Mo% - 2.5 × B% - 17 × C%. Steel materials 1 to 9 are example embodiments of the present invention, and steel materials 10 to 13 are comparative examples of ferritic steel. Steel material 14 is a comparative example of an austenitic steel that is equivalent to SUS 316L. For the steel materials 1 to 13, the head part of the ingot was extracted and subjected to microstructure observation with the material as it was in a cast state. In the steel materials 1 to 11 containing B, M₂B densely precipitated in only regions that were solidified by eutectic reaction on a side on which solidification occurred at a high solid-phase rate between secondary dendritic crystal. M₂₃C₆ precipitated continuously almost independently of M₂B at dendritic arm portions and in the vicinity of boundaries of regions that were solidified by eutectic reaction at a high solid phase rate, in only the steel materials 1 to 9. In the steel materials 10 and 11, precipitation of M₂₃C₆ was not recognized. In the steel materials 12 to 14, precipitation of either M₂B or M₂₃C₆ could not be confirmed.

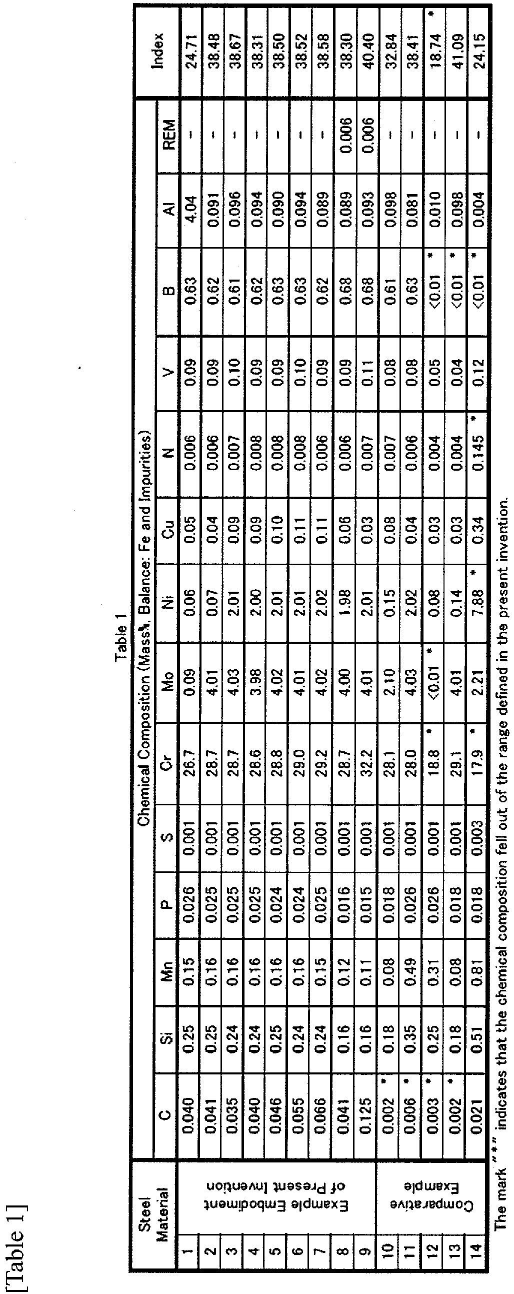

The cast surface of the respective ingots was removed by machining, and after being heated and held in a town gas heating furnace that was heated to 1170°C, the respective ingots were forged into a slab for heat rolling having a thickness of 60 mm and a width of 430 mm, at the surface temperature of the ingot being in a temperature range from 1170°C to 930°C. The slab for heat rolling having a surface temperature of 800°C or more was recharged as it was into the town gas heating furnace that remained heated to 1170°C to reheat the slab, and after being soaked and held, the slab was subjected to hot rolling to have a thickness of 30 mm with a two-stage upper and lower roll-type hot rolling mill, and gradually cooled to normal temperature. For the steel materials 1 to 11, an end of the hot rolling starting material was extracted and subjected to microstructure observation. The solidification structure was completely fractured by the forging and hot rolling, and the M₂B was also crushed and dispersed. A large proportion of the M₂₃C₆ confirmed in the steel materials 1 to 9 had been dispersed and precipitated without any correlation with the M₂B. That is, it was determined that, from the crushed and precipitated and dispersed state, a major part of the M₂₃C₆ was first dissolved on an austenite phase side that was generated when the slab was heated to 1170°C, and then reprecipitated at a phase interface in the course of hot rolling in which the austenite phase undergoes phase transformation to a ferritic phase, reprecipitated at a ferritic new crystal grain boundary at which recrystallization progresses during rolling, or in a cooling process to room temperature, precipitated on the surface of finely crushed M₂B precipitated and dispersed and in the vicinity thereof and also on the surface of dispersed M₂₃C₆, and was thereby enlarged. M₂B and M₂₃C₆ dispersed independently were also observed.

After cutting was performed on the surface and the end faces by machining, the steel materials 1 to 9 were heated and held once more in the town gas heating furnace heated to 1090°C, and thereafter subjected to hot rolling to have a thickness of 1.8 mm, being formed into coils having coil widths of 400 to 410 mm and individual weights of 100 to 120 kg. The ends of the steel materials 1 to 9 were extracted and subjected to microstructure observation. It was found that M₂B had been further finely crushed. Although M₂₃C₆ had also been crushed and dispersed, some M₂₃C₆ crushed and dispersed without any correlation with M₂B, some M₂₃C₆ precipitated on the surface of M₂B as a precipitation nucleus and at the periphery thereof, and some M₂₃C₆ precipitated at the crystal grain boundary with the ferritic phase were recognized. The greater the amount of C contained in the steel material was, the greater the proportion of M₂₃C₆ precipitated on the surface and at the periphery of M₂B as a precipitation nucleus was.

After making the coil widths 360 mm by slitting, surface oxide scale was grinded using a coil grinder at normal temperature, and after undergoing intermediate annealing at 1020°C, each coil was finished to a cold rolled coil with a thickness of 0.116 mm and a width of 340 mm while sandwiching steps of an intermediate coil pickling process and end face slitting in the process. Microstructure observation was performed on the steel materials 1 to 9 using coil ends. Both M₂B and M₂₃C₆ had been crushed extremely finely and dispersed. In terms of the size of M₂B, a large proportion thereof exceeded a size of 1 µm and was less than 8 µm, and the average size was determined to be between 3 and 5 µm. Although M₂B with a length of around 12 µm was confirmed in a detailed observation, the number of such M₂B was extremely small. The size of M₂₃C₆ that existed independently was finer than M₂B, and was from 1 to 2 µm.

Final annealing was performed in a bright annealing furnace in a 75 vol% H₂-25 vol% N₂ atmosphere in which the dew point was adjusted in the range of -50 to -53°C. The annealing temperature was 920°C. In the steel materials 1 to 9, the precipitated M₂₃C₆ was enlarged.

On the other hand, after the slabs of the steel materials 10 to 14 that were hot rolled to have a thickness of 30 mm were gradually cooled to room temperature, cutting of the surface and end faces was performed by machining and the slabs were heated and held again in a town gas heating furnace heated to 1170°C, and thereafter hot rolling to a thickness of 1.8 mm was performed to obtain coils having coil widths of 400 to 410 mm and individual weights of 100 to 120 kg.

After making the coil widths 360 mm by slitting, surface oxide scale was grinded using a coil grinder at normal temperature, and after undergoing intermediate annealing at 1080°C, each coil was finished into a cold rolled coil with a thickness of 0.116 mm and a width of 340 mm while sandwiching steps of an intermediate coil pickling process and end face slitting in the process.

Final annealing was performed in a bright annealing furnace in a 75 vol% H₂-25 vol% N₂ atmosphere in which the dew point was adjusted in the range of -50 to -53°C. The annealing temperature was 1030°C for the steel materials 10, 11, 12 and 13, and was 1080°C for the steel material 14.

For all the steel materials 1 to 14, noticeable end face cracking, coil rupturing, coil surface defects or coil perforation were not observed in the course of the present experimental production.

The micro-structures of the steel materials 1 to 13 were all ferrite single-phase micro-structures. In the steel materials 1 to 11 containing B, fine dispersion of M₂B was confirmed. Further, precipitation of M₂₃C₆ was confirmed in only the steel materials 1 to 9. Voids were not observed inside the steel materials.

The results regarding confirmed precipitation in the steels of all steel materials 1 to 15 are summarized in Table 2. Note that, the steel material 15 is a steel material obtained by performing a gold-plating process to an average thickness of 50 nm on the surface of a measurement starting material I of the steel material 14. Further, "M₂B + M₂₃C₆" in Table 2 indicates that M₂₃C₆ precipitated as a composite metallic precipitate on the surface and at the periphery of M₂B which served as the precipitation nucleus, and "M₂₃C₆" in Table 2 indicates that M₂₃C₆ precipitated independently. Further, "M₂B" indicates that M₂B precipitated independently.

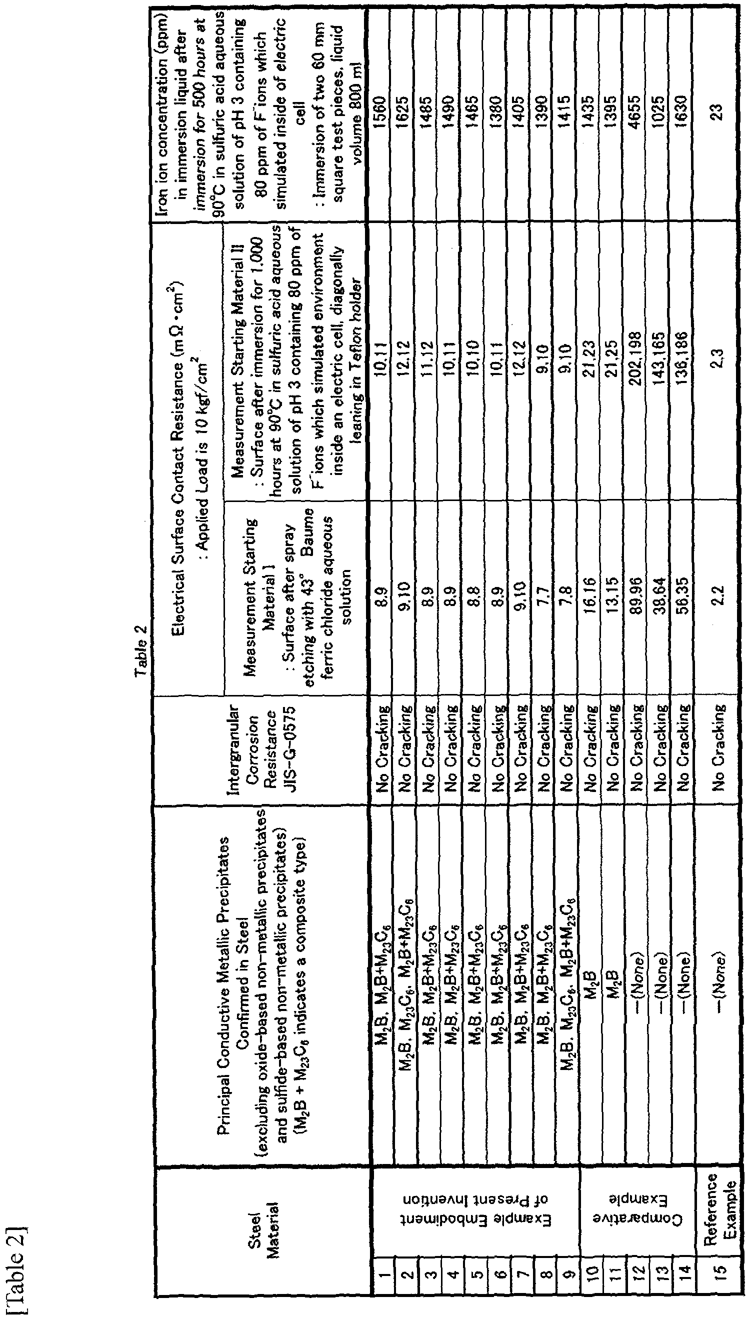

In the conductive metallic precipitates denoted by "M₂B + M₂₃C₆" in Table 2, M₂₃C₆ was precipitated on the surface of the M₂B in a manner such that the M₂₃C₆ covered the M₂B surface and spread branches with the M₂B as a precipitation nucleus. In the steel materials 1 to 9, independent precipitation of M₂B and independent precipitation of M₂₃C₆ were also confirmed.

Cleaning was performed after removing a bright annealing coating film by polishing with 600-grade emery paper, and an intergranular corrosion resistance evaluation was performed by a copper sulfate-sulfuric acid test method in accordance with JIS-G-0575. As shown in Table 2, sensitization was not observed.

As shown in Table 2, it was confirmed that, by precipitation and dispersion of M₂B, and furthermore, precipitation of M₂B and M₂₃C₆ as a composite-type precipitate, the electrical surface contact resistance was stable and noticeably improved.

### EXAMPLE 2

The steel material 14 in Table 1 is a material that is equivalent to conventional austenitic stainless steel having a plate thickness of 0.116 mm.

Cut plates having a thickness of 0.116 mm, a width of 340 mm and a length of 300 mm were extracted from the steel materials 1 to 15, and a spray etching process using a 43° Baume ferric chloride aqueous solution was performed at 35°C simultaneously on the entire top and bottom faces of the cut plates. The time period of the etching process by spraying is 40 seconds. The etching amount was set at 8 µm for a single face.

Immediately after the spray etching process, spray washing with clean water, washing by immersion into clean water, and a drying treatment using an oven were performed consecutively. After the drying treatment, 60-mm square samples were cut out and adopted as starting material I for electrical surface contact resistance measurement.

Further, 60-mm square samples that were separately extracted from the steel materials 1 to 15 were subjected to immersion treatment for 1000 hours at 90°C in a sulfuric acid aqueous solution of pH 3 containing 80 ppm F⁻ions which simulated the inside of a polymer electrolyte fuel cell, and adopted as starting material II for electrical surface contact resistance measurement which simulated the environment during fuel cell application.

With respect to the steel materials 1 to 15, electrical surface contact resistance measurement was performed while the starting material for evaluation was held between platinum plates in a state in which the starting material for evaluation was sandwiched with carbon paper TGP-H-90 manufactured by Toray Industries, Inc. Measurement was performed by a four-terminal method that is commonly used for evaluating separator materials for fuel cells. The applied load at the time of measurement was 10 kgf/cm². The lower the measurement value that was obtained, the greater the degree to which the measurement value indicated a reduction in IR loss at the time of power generation, and also a reduction in energy loss due to heat generation. The carbon paper TGP-H-90 manufactured by Toray Industries, Inc. was replaced for each measurement. Note that, measurement was performed twice at different places on the respective steel materials.

The electrical contact resistance measurement results and the amount of iron ions that eluted into the sulfuric acid aqueous solution of pH 3 which simulated an environment inside an electric cell are summarized in Table 2. In the metal ion elution measurement, although Cr ions and Mo ions and the like were also determined at the same time, since the amount thereof was very small, the behavior of such ions is indicated by comparison with the Fe ion amount for which the elution amount was largest.

Note that, as described above, the steel material 15 is a starting material obtained by performing a gold-plating process to an average thickness of 50 nm on the starting material I for surface contact resistance measurement of the steel material 14, and the gold-plated material is considered to be the ideal starting material that has the most excellent electrical surface contact resistance performance. Therefore, the steel material 15 is additionally shown as a reference example.

As shown in Table 2, it was found that the electrical contact resistance performance of the example embodiments of the present invention (steel materials 1 to 9) in which M₂₃C₆ dispersedly precipitated as composite metallic precipitates on the surface and at the periphery of the dispersed M₂B serving as precipitation nuclei was stable and lower in comparison to the steel materials 10 and 11 in which only M₂B dispersedly precipitated and was exposed on the surface, and was comparable to the contact resistance performance of the steel material 15.

### EXAMPLE 3

Separators having the shape shown in the photograph in Figure 2 were press-formed using the coil starting materials prepared in Example 1, and application thereof to actual fuel cells was evaluated. The reaction effective area of a channel portion of the separators was 100 cm².

A setting evaluation condition for fuel cell operation was a constant-current operation evaluation at a current density of 0.1 A/cm², and this is one of the assumed operation environments for a stationery-type fuel cell for household use. The hydrogen and oxygen utilization ratio was made constant at 40%. The evaluating time was 1,000 hours.

The evaluation results for the steel materials 1 to 15 are summarized in Table 3. Note that, for the steel materials 12, 13 and 14 in Table 3, there was a marked decline in performance, and evaluation was ended after less than 400 hours.

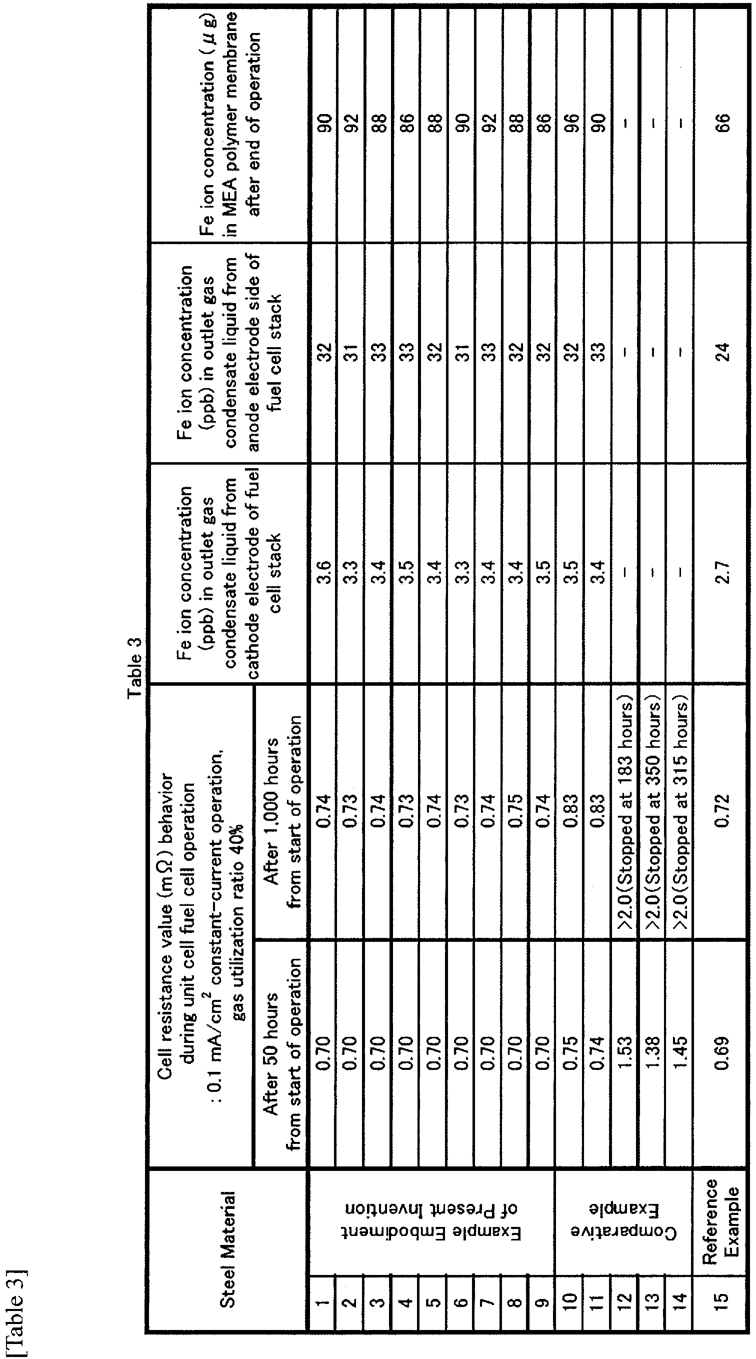

As shown in Table 3, marked differences were observed in cell resistance values that were measured using a commercially available resistance meter (model 3565) manufactured by Tsuruga Electric Corporation, and the dispersion effect of the M₂B + M₂₃C₆ composite-type conductive metallic precipitates was confirmed. In addition, as shown in Table 3, deterioration in performance over time in the example embodiments 1 to 9 of the present invention was also small. After operation ended, the stack was disassembled and the applied separator surface was observed, and it was confirmed that there was no rusting from the separator and that the amount of metal ions in the MEA also did not increase.

### EXAMPLE 4

Steel materials 1 to 14 having the compositions shown in Table 4 were melted in a 180-kg vacuum furnace, and subsequently cast into flat ingots with a maximum thickness of 80 mm. The steel materials 1 to 9 are example embodiments of the present invention, and the steel materials 10 to 14 are comparative examples. Note that, in Table 4, an underline indicates that the relevant value is outside the range of the present invention, "REM" represents a misch metal (rare earth metal), and "Index" (%) = Cr% + 3×Mo% - 2.5×B% - 17×C%.

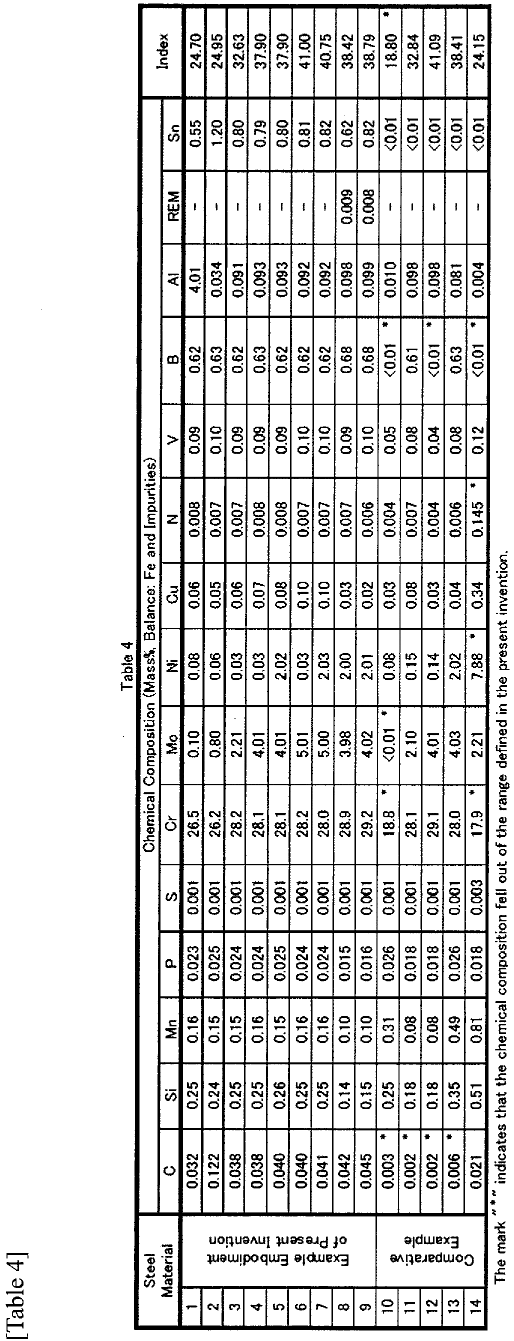

The cast surface of the respective ingots was removed by machining, and after being heated and held in a heating furnace that used city gas that was heated to 1170°C, the respective ingots were forged into a slab for heat rolling having a thickness of 60 mm and a width of 430 mm, with the surface temperature of the ingot being in a temperature range from 1170°C to 930°C.

The slab for heat rolling having a surface temperature of 800°C or more was recharged into the heating furnace that used city gas that remained heated as it was to 1170°C to thereby reheat the slab, and after being soaked and held, the slab was subjected to hot rolling to a thickness of 30 mm with a two-stage upper and lower roll-type hot rolling mill, and gradually cooled to room temperature.

After cutting was performed on the surface and the end faces by machining, the steel materials 1 to 9 were heated and held once more in the heating furnace that used city gas which was heated to 1090°C, and thereafter hot rolling was performed to a thickness of 1.8 mm to obtain coils having coil widths of 400 to 410 mm and individual weights of 100 to 120 kg.

After making the coil widths 360 mm by slitting, surface oxide scale was grinded using a coil grinder at normal temperature, and each coil was finished to a cold rolled coil with a thickness of 0.116 mm and a width of 340 mm while sandwiching steps of intermediate annealing at 1020°C, an intermediate coil pickling process and end face slitting in the process.

Final annealing was performed in a bright annealing furnace in a 75 vol% H₂-25 vol% N₂ atmosphere in which the dew point was adjusted in the range of -50 to -53°C. The annealing temperature was 920°C.

On the other hand, after gradually cooling hot rolling slabs up to a thickness of 30 mm of the steel materials 10 to 14 to room temperature, cutting was performed on the surface and the end faces by machining, and after being heated and held again in a heating furnace that used city gas that was heated to 1170°C, hot rolling was performed to a thickness of 1.8 mm to obtain coils with coil widths from 400 to 410 mm and individual weights of 100 to 120 kg. After making the respective coil widths 360 mm by slitting, surface oxide scale was grinded using a coil grinder at normal temperature, and each coil was finished to a cold rolled coil with a thickness of 0.116 mm and a width of 340 mm while sandwiching steps of intermediate annealing at 1080°C, an intermediate coil pickling process and end face slitting in the process. Final annealing was performed in a bright annealing furnace in a 75% H₂-25% N₂ atmosphere in which the dew point was adjusted in the range of -50 to -53°C. The annealing temperature was 1030°C for the steel materials 10 to 13, and 1080°C for the steel material 14.

With respect to all the steel materials 1 to 14, noticeable end face cracking, coil rupturing, coil surface defects or coil perforation was not observed in the course of the present experimental production. With the exception of the steel material 14 that is equivalent to commercially available austenitic stainless steel, all of the micro-structures were ferrite single-phase micro-structures, and it was confirmed that in all of the steel materials in which B was added, the added B precipitated in the steel as M₂B, and the M₂B was finely crushed in sizes ranging from 1 µm for smaller precipitates to around 7 µm for larger precipitates, and was uniformly dispersed from a macro viewpoint including the plate thickness direction. Voids were not observed inside the steel materials.

The results regarding confirmed precipitation in the steels of all steel materials 1 to 15 are summarized in Table 5. In Table 5, "M₂B + M₂₃C₆" indicates that M₂₃C₆ precipitated as a composite metallic precipitate on the surface and at the periphery of M₂B which served as the precipitation nucleus, and "M₂₃C₆" indicates that M₂₃C₆ precipitated independently. Further, the steel material 15 is a steel material obtained by performing a gold-plating process to an average thickness of 50 nm on the surface of a measurement starting material I of the steel material 14.

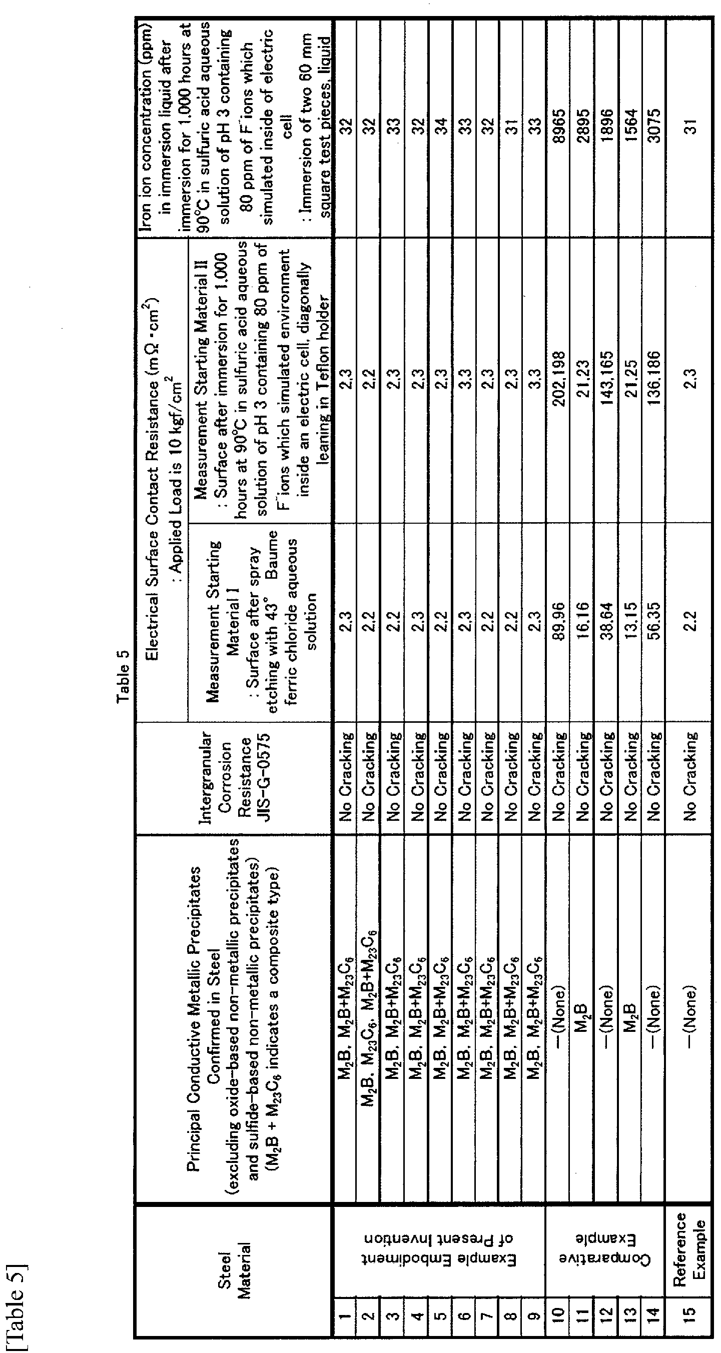

In the conductive metallic precipitates denoted by "M₂B + M₂₃C₆" in Table 5, M₂₃C₆ was precipitated on the surface of the M₂B in a manner such that the M₂₃C₆ covered the M2B surface and spread branches with the M₂B as a precipitation nucleus. In the steel materials 1 to 9 and 11 and 13, independent precipitation of M₂B and independent precipitation of M₂₃C₆ was also confirmed. An influence of Sn addition on the precipitation behavior, crushing/dispersion behavior, redissolving behavior and reprecipitation behavior of M₂B and M₂₃C₆ was not observed.

Cleaning was performed after removing a bright annealing coating film by polishing with 600-grade emery paper, and an intergranular corrosion resistance evaluation was performed by a copper sulfate-sulfuric acid test method in accordance with JIS-G-0575. As a result, sensitization was not observed, as shown in Table 5. It was confirmed that, by the precipitation and dispersion of M₂B and by containing Sn, and furthermore, by precipitation of M₂B and M₂₃C₆ as a composite-type precipitate, the electrical surface contact resistance was more stable and was the same level as that of a gold-plated material, and the eluted iron ions were also of the same level as in the case of gold plating.

### EXAMPLE 5

The steel material 14 in Table 4 is material that is equivalent to conventional austenitic stainless steel having a plate thickness of 0.116 mm.

Cut plates having a thickness of 0.116 mm, a width of 340 mm and a length of 300 mm were extracted from the steel materials 1 to 14 shown in Table 4, and a spray etching process using a 43° Baume ferric chloride aqueous solution was performed at 35°C simultaneously on the entire top and bottom faces of the cut plates. The time period of the etching process by spraying was 40 seconds. The etching amount was set at 8 µm for a single face.

Immediately after the spray etching process, spray washing with clean water, washing by immersion into clean water, and a drying treatment using an oven were performed consecutively. After the drying treatment, 60-mm square samples were cut out and adopted as starting material I for electrical surface contact resistance measurement.

Further, 60-mm square samples that were separately extracted were subjected to immersion treatment for 1000 hours at 90°C in a sulfuric acid aqueous solution of pH 3 containing 80 ppm F-ions which simulated the inside of a polymer electrolyte fuel cell, and adopted as starting material II for electrical surface contact resistance measurement which simulated the environment during fuel cell application.

Electrical surface contact resistance measurement was performed while the starting material for evaluation was held between platinum plates in a state in which the starting material for evaluation was sandwiched with carbon paper TGP-H-90 manufactured by Toray Industries, Inc. Measurement was performed by a four-terminal method that is commonly used for evaluating separator materials for fuel cells. The applied load at the time of measurement was 10 kgf/cm². It has been shown that as the measurement value is lower, IR loss at the time of power generation is reduced, and energy loss due to heat generation is also reduced. The carbon paper TGP-H-90 manufactured by Toray Industries, Inc. was replaced for each measurement. Note that, measurement was performed twice at different places on the respective steel materials.

The electrical contact resistance measurement results and the amount of iron ions that eluted into the sulfuric acid aqueous solution of pH 3 which simulated an environment inside an electric cell are summarized in Table 5. In the metal ion elution measurement, although Cr ions, Mo ions and the like were also determined at the same time, since the amount thereof was very small, the behavior of such ions is indicated by comparison with the Fe ion amount for which the elution amount was largest.

Note that, as described above, the steel material 15 is a starting material obtained by performing a gold-plating process to an average thickness of 50 nm on the starting material I for surface contact resistance measurement of the steel material 14, and the gold-plated material is considered to be the ideal starting material that has the most excellent electrical surface contact resistance performance. Therefore, the steel material 15 is additionally shown as a reference example.

As shown in Table 5, with the exception of the steel materials 10 to 14 to which Sn was not added, the presence of metallic tin and tin oxide was confirmed on the surface the starting material I for electrical surface contact resistance measurement after the spray etching process using the ferric chloride aqueous solution, and on the surface of the starting material II that simulated an environment during fuel cell application using sulfuric acid aqueous solution of pH 3. It was found that comparing the steel materials 10, 12 and 14 in which M₂B conductive metallic precipitates did not precipitate with the steel materials 11 and 13 in which metallic tin and tin oxide were not present on the surface because Sn was not added thereto, the electrical surface contact resistance values of the steel materials 1 to 9 which were materials to which B and Sn were added distinctly decreased, and the improvement effect is very noticeable. Note that it was determined that the metallic tin and tin oxide also concentrate on the surface of M₂B and contribute to improving the electrical conductivity of M₂B and also to stabilizing the performance.

Based on the analysis results for the iron ions in the immersion liquid that simulated the inside of a fuel cell that are shown in Table 5, it is clear that there was an improvement effect caused by Sn addition. Note that the reason the steel material 15 being a gold-plated material was favorable is because of a protection film effect of a gold plating film that is excellent in corrosion resistance that covers almost the entire surface of the steel material 15. It could be determined that the corrosion resistance of the steel materials 1 to 9 that were example embodiments of the present invention was equivalent to that of a gold-plated material, and it could thus be confirmed that a surface covering effect of the same level as gold plating inside a fuel cell can also be expected of metallic tin and tin oxide.

### EXAMPLE 6

Separators having the shape shown in Figure 2 were press-formed using the coil starting materials prepared in Example 4, and application thereof to actual fuel cells was evaluated. The channel portion area of the separators was 100 cm². A setting evaluation condition for fuel cell operation was a constant-current operation evaluation at a current density of 0.1 A/cm², and this is one of operation environments for a stationery-type fuel cell for household use. The hydrogen and oxygen utilization ratio was made constant at 40%. The evaluating time was 1,000 hours.

The evaluation results for the steel materials 1 to 15 are summarized in Table 6. Note that, for the steel materials 10, 12 and 14 in Table 6, there was a marked decline in performance, and evaluation was ended after less than 400 hours.

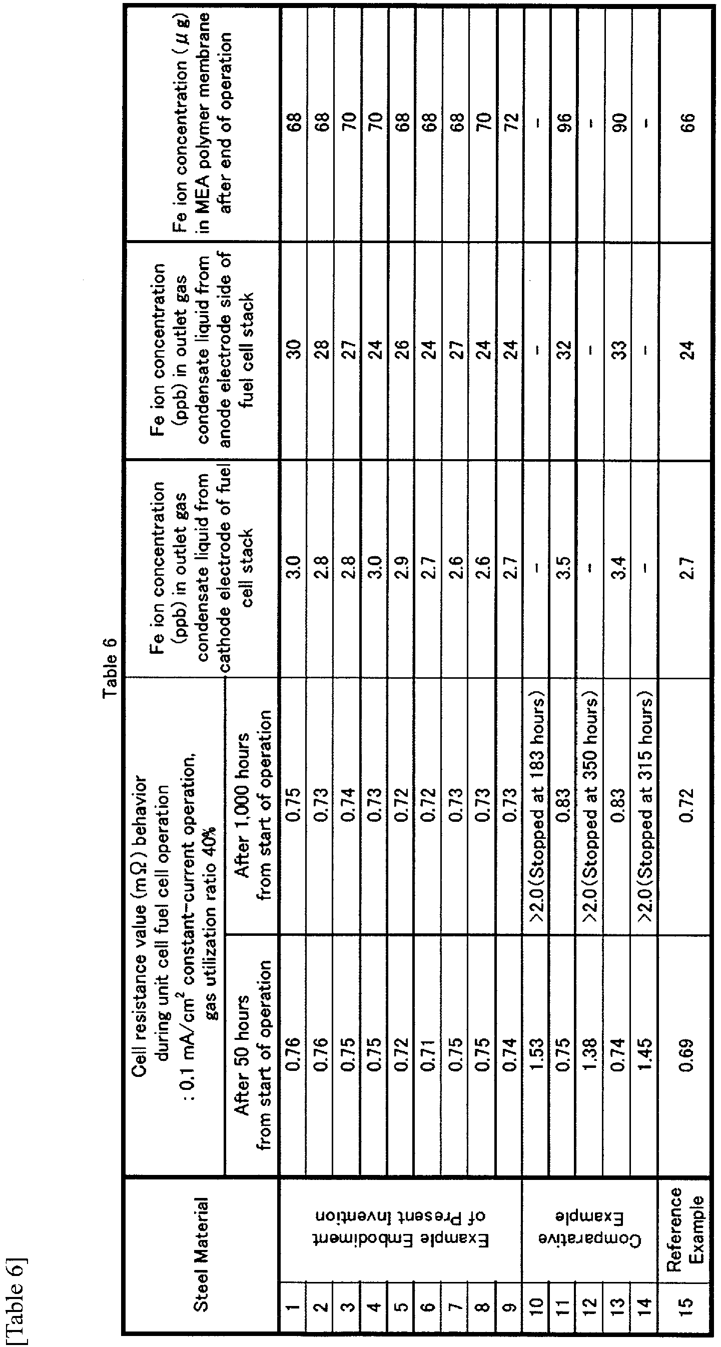

As shown in Table 6, marked differences were observed in cell resistance values that were measured using a commercially available resistance meter (model 3565) manufactured by Tsuruga Electric Corporation, and the dispersion effect of the M₂B + M₂₃C₆ composite-type conductive metallic precipitates and the Sn addition effect was confirmed. In addition, as shown in Table 6, deterioration in performance over time in the steel materials 1 to 9 was also small. After operation ended, the stack was disassembled and the applied separator surface was observed, and it was confirmed that there was no rusting from the separator and that the amount of metal ions in the MEA also did not increase.

### REFERENCE SIGNS LIST

- 1: Fuel Cell
- 2: Solid Polymer Electrolyte Membrane
- 3: Fuel Electrode Layer (Anode)
- 4: Oxide Electrode Layer (Cathode)
- 5a, 5b: Separator
- 6a, 6b: Channel

## Claims

1. A ferritic stainless steel material having a chemical composition comprising, by mass%,
C: 0.02 to 0.15%,
Si: 0.01 to 1.5%,
Mn: 0.01 to 1.5%,
P: 0.035% or less,
S: 0.01% or less,
Cr: 22.5 to 35.0%,
Mo: 0.01 to 6.0%,
Ni: 0.01 to 6.0%,
Cu: 0.01 to 1.0%,
N: 0.035% or less,
V: 0.01 to 0.35%,
B: 0.5 to 1.0%,
Al: 0.001 to 6.0%,
rare earth metal: 0 to 0.10%,
Sn: 0 to 2.50%, and,
the balance: Fe and impurities, wherein:
a value calculated as {Cr content (mass%) + 3 × Mo content (mass%) - 2.5 × B content (mass%) - 17 × C content (mass%)} is from 20 to 45%,
the ferritic stainless steel material further having a parent phase comprising only a ferritic phase, wherein:
at least composite metallic precipitates including M₂₃C₆ carbide-based metallic precipitates precipitated on surfaces and at peripheries of M₂B boride-based metallic precipitates serving as precipitation nuclei are dispersed and exposed on a surface of the parent phase.

2. The ferritic stainless steel material according to claim 1, wherein the chemical composition contains, by mass%,
rare earth metal: 0.001 to 0.10%.

3. The ferritic stainless steel material according to claim 1 or 2, wherein the chemical composition contains, by mass%,
Sn: 0.02 to 2.50%.

4. The ferritic stainless steel material according to any one of claims 1 to 3, wherein one or two kinds of M₂B boride-based metallic precipitates and M₂₃C₆ carbide-based metallic precipitates are further independently dispersed and exposed on the surface.

5. The ferritic stainless steel material according to any one of claims 1 to 4, wherein the parent phase becomes a dual-phase micro-structure of a ferritic phase and an austenite phase in a temperature range of 1100°C or more and 1170°C or less.

6. A separator for a polymer electrolyte fuel cell comprising the ferritic stainless steel material for a polymer electrolyte fuel cell separator according to any one of claims 1 to 5.

7. A polymer electrolyte fuel cell comprising the ferritic stainless steel material for a polymer electrolyte fuel cell separator according to any one of claims 1 to 5.
